# EUROPEAN PATENT SPECIFICATION

(11) **EP 3 240 242 B1**
(45) Date of publication and mention of the grant of the patent: **03.03.2021**
(21) Application number: 17168345.1
(22) Date of filing: 27.04.2017
(51) Int. Cl.: H04L 12/26, H04L 29/08, G06Q 30/02, G06Q 10/04, G06Q 10/06, G06Q 10/10, G06Q 30/06

(54) **RECOMMENDATION ENTITY FOR A COMMUNICATIONS NETWORK**
EMPFEHLUNGSVORRICHTUNG FÜR EIN KOMMUNIKATIONSNETZWERK
DISPOSITIF DE RECOMMENDATION POUR UN RÉSEAU DE COMMUNICATION

(30) Priority: 27.04.2016 GB 201607343
(43) Date of publication of application: 01.11.2017
(73) Proprietor: Vodafone IP Licensing Limited, Newbury, Berkshire RG14 2FN (GB)
(72) Inventor: VICKERS, Steven, London, Greater London W2 6BY (GB); SCARIANO, Carmelo, London, Greater London W2 6BY (GB); FASSMER, Jens, London, Greater London W2 6BY (GB); SAMWELL-DINIZ, Rodrigo, London, Greater London W2 6BY (GB)
(74) Representative: Boult Wade Tennant LLP

(56) References cited:
- WO-A2-2014/116286
- US-A1- 2013 246 594
- US-B1- 9 319 534
- EARDLEY A MORTON AT&T LABS M BAGNULO UC3M T BURBRIDGE P AITKEN BROCADE A AKHTER CONSULTANT P: "A Framework for Large-Scale Measurement of Broadband Performance (LMAP); rfc7594.txt", A FRAMEWORK FOR LARGE-SCALE MEASUREMENT OF BROADBAND PERFORMANCE (LMAP); RFC7594.TXT, INTERNET ENGINEERING TASK FORCE, IETF; STANDARD, INTERNET SOCIETY (ISOC) 4, RUE DES FALAISES CH- 1205 GENEVA, SWITZERLAND, 18 September 2015 (2015-09-18), pages 1-55, XP015107686, [retrieved on 2015-09-18]

## Description

### Field of the Disclosure

This disclosure relates to the generation and delivery of recommendations for users of electronic communications devices, especially mobile terminal users, in a communications network.

### Background

Communications networks may be loosely categorised into fixed-line networks (from the copper wire of conventional telephone systems to more sophisticated cable and optical fibre networks) and wireless networks. Examples of wireless networks include cellular telecommunications networks, satellite telecommunications networks and wireless local access networks (WLANs), using ad hoc technologies such as WiFi.

Various radio access technologies (RATs) are implemented in cellular telecommunications networks: currently *digital* cellular networks are the most common and these are loosely classed as second generation (2G), third generation (3G), fourth generation (4G), etc. technologies according to whether the RAT achieves effective data communications that meet increasingly challenging requirements.

The operators of cellular telecommunications networks must balance effective usage of their network(s) with the continued delivery of services that satisfy their customers' (i.e. subscribers) requirements.

Increasingly, subscribers make use of ad hoc networks, such as WiFi hotspots, to access services in addition to the use of cellular networks.

User equipment (UEs), such as cellular phones and other mobile terminals, typically have more than one mechanism to interface with respective communications networks to provide access to data services.

It is known for operators to provide offers to their customers that reflect what the customer is doing: the operator may determine that a user is using a particular phone function (such as a voice call facility or a built-in camera) or application (such as an internet browser application of a social networking service, SNS, application). The offers may relate to the provision of "bolt-on" services relevant to the function and/or application used.

The presence of encryption, particularly in relation to applications, directly restricts the ability of the operator to classify how a user is using a data connection and therefore prevents the operator from identifying a specific type of usage in order to trigger an offer that relates to that usage.

WO2014116286 describes a method for controlling a broadband service, the method comprising: collecting user behavior, usage data, and physical layer data associated with the broadband service; analyzing the collected data to determine whether a different broadband service can be offered to a user compared to existing broadband service; and providing the user a targeted offer according to the analysis.

P. Eardley et al. "A Framework for Large-Scale Measurement of Broadband Performance (LMAP)" describes that measuring broadband service on a large scale requires a description of the logical architecture and standardisation of the key protocols that coordinate interactions between the components.

US9319534 provides a system, method, and computer program product for automatically generating personalized offers for a consumer in a telecommunication consumer network.

US 2013/0246594 describes mechanisms and methods for SNMP based mobile device management.

CN102332017 describes providing a method and a device for displaying recommended information based on operation information in a mobile device, wherein the method comprises the following steps: getting the recommended information to be displayed based on the current operation information in the mobile device; then displaying the recommended information in a preset display region on a screen of the mobile device; and performing matching query in a recommended library according to the obtained current operation information corresponding to the mobile device in a network device so as to get the recommended information corresponding to the current operation information, and sending the recommended information to the mobile device.

### Summary of the Invention

The present invention provides methods for recommending an action at an electronic terminal in a communication network, a controller entity and an electronic terminal. The scope of the present invention is defined in the claims.

### Brief Description of the Drawings

Various embodiments of the present disclosure will now be described with reference to the accompanying drawings, in which:
Figure 1 illustrates a system in accordance with the present disclosure;
Figures 2A and 2B show respective exemplary signalling diagrams for the operation of the system of Figure 1;
Figure 3 shows certain functional components of a terminal in accordance with the present disclosure; and
Figure 4 shows certain functional components of a controller entity in accordance with the present disclosure.

### Detailed Description of Preferred Embodiments

The present disclosure relates to the provision of real-time tailored contextual recommendations for users of electronic communications devices, especially mobile terminal users (such as users of smartphones, tablets etc.).

To improve the recommendations, it is first necessary to obtain suitable information concerning the operation of the mobile terminal. This has become increasingly difficult with the rise in encrypted traffic on the internet. Data associated with applications such as Facebook [RTM], YouTube[RTM], Google[RTM], tumblr[RTM], Instagram[RTM], Snapchat[RTM], Baidu[RTM] and Twitter[RTM] currently form a significant share of the traffic delivered over cellular telecommunications networks, such proprietary applications increasingly encourage their subscribers to use secure communication protocols (including encryption), which inhibits network operators in recognising the type of traffic being used. This is especially the case where a service, such as a social network service (SNS), has mixed content: an SNS feed can include Web content, video, Instant Messaging, photo galleries, video chat, online games and much more: where each category of content may be secured using different data compression and/or encryption techniques.

There is increasing demand from network operators to provide more real-time tailored contextual recommendations to mobile customers that reflect how those customers are using their terminal. These recommendations may be offers to provide additional services both in terms that the customer understands (e.g., an hour of streaming audio, unlimited SNS usage, etc.), and be generated at the time the customer is more likely to want them (e.g. when a customer is using the SNS App they are more likely to accept a pop-up offer of "free" SNS usage than if they are looking at a News website and the same offer is made).

If much of the user's activity is veiled by encryption, any recommendations will risk becoming distorted (reflecting only the operational data that can be understood) and potentially unwanted or irrelevant. Encryption directly restricts the ability of the network operator to classify how a customer is using a data connection and therefore prevents the operator from distinguishing between specific types of usage in order to trigger relevant contextual recommendations. Indirectly, therefore, the rise in encryption may lead to an increase in unwanted data traffic (with recommendations that do not, and may never, reflect the customer's requirements) - inconveniencing the subscriber/customer and wasting network resource.

It is known to provide, in a network entity, functionalities adapted to analyse data traffic to recognise the type of traffic. Examples of such techniques include deep packet inspection, DPI, and heuristic analysis. It is also known to provide dedicated functional components that implements the categorisation/recognition of traffic, one such component is the traffic detection function, TDF.

Such functionalities by themselves become less precise when the traffic is encrypted. At the same time, the mobile terminal user's device is a source of precious information that the operating systems make available through APIs (e.g. application in use regardless the bearer being encrypted, device condition, location etc.). Such device insight would result into simply a collection of large quantities of information if not properly contextualized and managed, and may result in battery drain on the device.

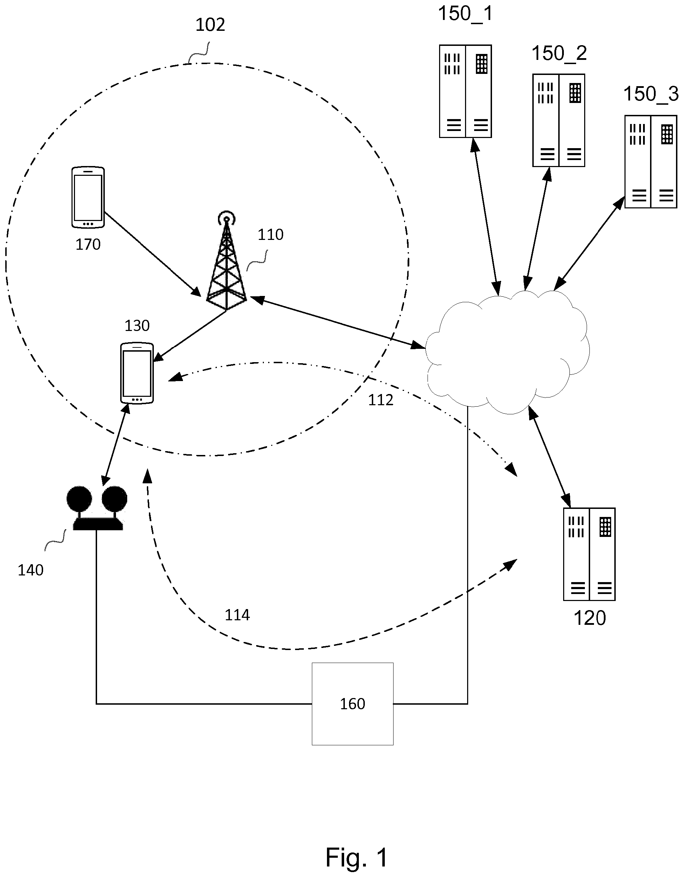

Figure 1 illustrates a system for recommendation of actions comprising a user terminal 130 and a network controller entity 120. The terminal 130 and the controller entity 120 are in communicative connection via a communication network 112 (for example a cellular telecommunications network, represented in the illustrated example by a base station 110). The user terminal 130 may additionally or alternatively be in communicative connection via a second communication network 114 (in the illustrated example, via a WiFi hub 140 attached to a fixed line broadband network via an access point 160). Typically more than one user terminal is present within the coverage 102 of the communication network 112: to illustrate this, a second user terminal 170 is shown in the Figure.

One or more network service entity 150 may be connected to the user terminal 130 and the network controller entity 120: Figure 1 shows three network service entities 150_1, 150_2, 150_3. Examples of network service entity 150 include entities external to the user terminal such as an advertisement manager, a recommendation entity, a device management entity, an entity providing an access network discovery and selection function (ANDSF) and/or a network entity dedicated to determining notification policies). In certain cases, the network service entity may be a component of the controller entity 120 itself.

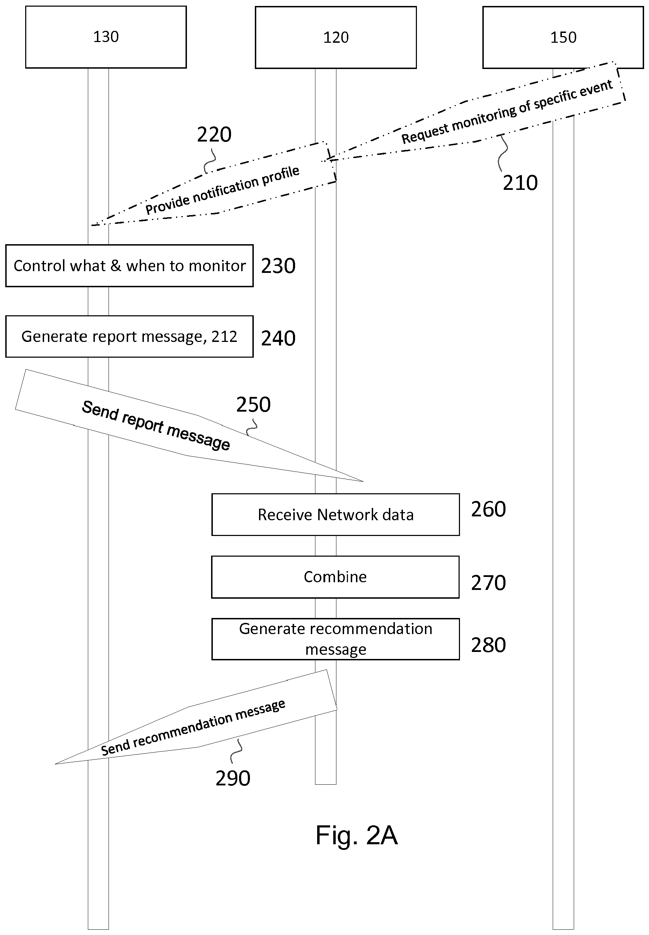

Figure 2A shows an exemplary signalling diagram for the operation of the system of Figure 1.

At operation 210, a network service entity 150 requests monitoring of specific events on one or more user terminals. The specific events may be indicated by the value (or change in value) of one or more operational parameters of the user terminal. The request is sent to the network controller entity 120.

In turn, the network controller entity 120, sends the request for monitoring to at least one user terminal 130 (operation 220). In the illustrated case, the request for monitoring is incorporated in a notification profile.

The terminal 130 executes a client software application (hereafter the "client"). In operation 230, the notification profile including the request for monitoring is received by the terminal 130 and the client is set to monitor operational information (including information concerning the value of the or each operational parameter indicative of specific monitored events). The operational information may include information concerning applications executing (i.e. running or active) on the terminal and/or device specific information, such as the presence and strength of short range and long range radio access networks (e.g. WiFi, cellular network, etc.).

The terminal (i.e. the client) may, as illustrated in Figure 2A, be set to monitor for specific events in accordance with one or more notification profile. Notification profiles may be provided by the network operator or by a recommendation source (for example to determine whether a device event occurs that may be relevant to a recommendation or a campaign of recommendations). In certain cases, respective notification profiles are sent by respective network service entities 150_1, 150_2, 150_3 via the network controller entity 120; alternatively or additionally a single notification profile is generated from respective requests for monitoring received from one or more network service entity 150.

Thus in certain embodiments one or more network service entities may request monitoring of respective, specific events (e.g. the launch of an SNS application by a customer using the user terminal 130). Specific event monitoring requests from the or each external entity may be included within a corresponding notification profile provided to the user terminal by said external entity. Once the or each network service entity requests monitoring of specific event, the controller entity 120 contacts the user terminal 130 and, if any version of the client exists on the terminal, the configuration of the client may be initialised and/or modified to start monitoring for the specific event required in accordance with the or each notification profile.

In certain cases, the network controller entity 120 receives event monitoring requests from the or each network service entity 150, generates a collated notification profile and then transmits the collated notification profile to the user terminal 130. Once the or each network service entity requests monitoring of a specific event, the controller entity 120 contacts the terminal (e.g. using a push notification including the collated notification profile) and if any version of the client exists on the terminal the configuration of the client may be initialised and/or modified to start monitoring (i.e. polling) for the specific event required in accordance with the collated notification profile. This ensures the client only monitors for events that are needed, and therefore avoids unnecessary drain on the battery of the device (caused by it needing to run all the time), and avoids unnecessary signalling to the controller entity (which would also drain battery).

In certain cases, the specific event may itself be a trigger for a more detailed monitoring of certain operational parameters by the client. The monitoring of events may include conditional monitoring of a wider number of operational parameters: so that certain secondary operational parameters are only sampled upon the occurrence of one or more primary events, i.e. trigger events. For example, the notification profile may require that operational data concerning which application is executing, say, is monitored only when a change from a lock screen to an active screen is detected. The trigger parameters and the values taken by those parameters to trigger such conditional monitoring may be included within the notification profile. This ensures the client only monitors the wider number of operational parameters when they are needed, and again reduces demand for battery power from the terminal.

In certain embodiments, the notification profile may additionally or alternatively be configured by the user through a user interface and/or in accordance with a predetermined profile that is previously stored in the terminal. The user may then vary (and/or override) a trigger point for a given event monitored according to the notification profile: for example, the user may provide a user entered location in place of a location determined through a location determining means such as a GPS unit.

In operation 240, the client determines that a specific event has occurred and initiates the generation of a report from the monitored operational information. Examples of such events include changes in the application(s) in use (including whether they have been initiated or updated), changes in which application is in foreground, and/or changes in device status, device communication conditions, received signal strength for short range and long range radio access networks, location etc.

The generation of the report may, as previously noted, include the initiation of further monitoring and/or the obtaining of values for one or more secondary operational parameters. The contents of the report may include information concerning the operational parameters that indicated the occurrence of the event and further information concerning other operational data, including secondary operational parameter values. For the network controller entity to be able to determine whether to provide a recommendation it may be necessary to receive a report of device operation events more generally. The notification profile may therefore set out both primary and secondary operational parameters for monitoring and an indication of the circumstances when these parameters are to be monitored by the client.

Upon occurrence of an event for which the client monitors, the terminal is therefore controlled to generate a terminal event report message 212. The terminal 130 then, in operation 250, transmits the terminal event report message 212 (which may also be referred to as a report message) to the controller entity 120. The terminal event report message 212 includes at least one item of terminal information.

In certain embodiments, the generation and transmission of the terminal event report message 212 may be conditional. The terminal (i.e. the client) may process the monitored operational parameters and determine that the monitored operational parameters should be reported according to the value taken by one or more of the operational parameters.

The controller entity 120 is configured to receive messages from at least one terminal 130, 170 via the communication network 112, including the terminal event report message 212. The controller entity 120 is further configured to obtain information concerning the operation of the network 112, including information specific to the operation of the mobile device in the network and/or information regarding the network characteristics of the network or networks used by the terminal (such as transport streams used by the terminal, subscriber data quota, credit balance remaining for user, network coverage/capacity, etc.).

In certain embodiments, regardless of the method by which the notification profile is obtained, the controller entity 120 may define and/or control which terminal events are monitored, which events are to be reported and the timing of any such reporting message.

At operation 260, the controller entity receives information concerning the operation of the network, (hereafter referred to as "network data").

At operation 270, the controller entity 120 then combines terminal information from the terminal event report message 212 with the network data. The terminal information and the network data are processed to determine whether the combination fulfils at least one predetermined recommendation trigger criterion.

If a recommendation trigger criterion is satisfied, the controller entity generates a recommendation message (operation 280). The recommendation message is then transmitted to the terminal via the communications network (operation 290), thereby providing a recommendation for a user action.

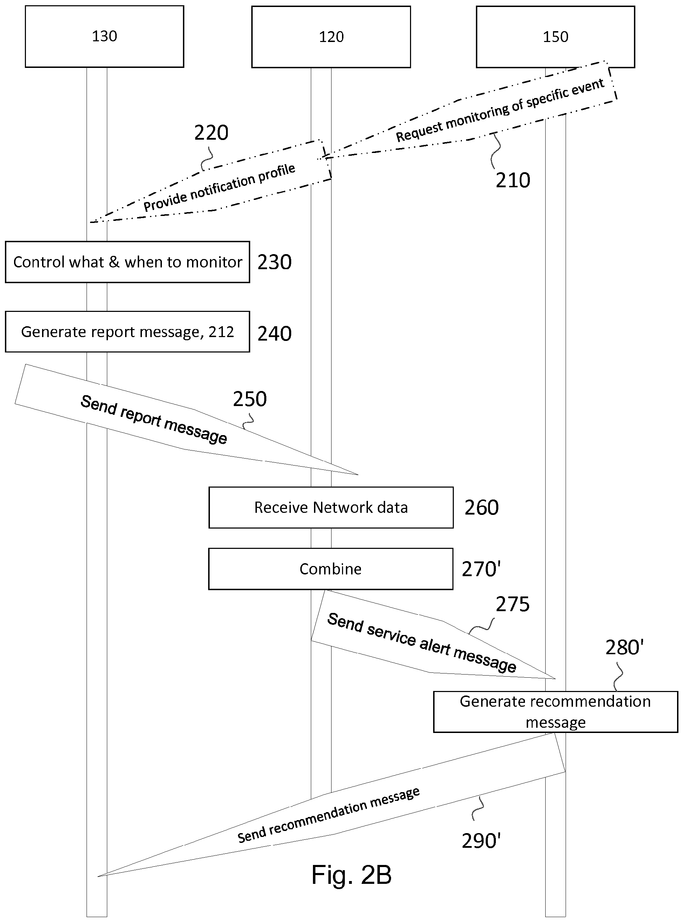

In an alternative scenario, illustrated in Figure 2B, operations 210 to 260 proceed as described above in relation to Figure 2A but the controller entity 120 may combine operational information and network data to generate a service alert message (operation 270'). The service alert message is then transmitted to a network element 150 (for instance the network service entity that requested monitoring), operation 275. The network element 150 may then, in turn, generate a recommendation message, operation 280', and then send the recommendation message to the user terminal 130 (directly, as shown in Figure 2B, or via the network controller entity 120), operation 290'. The recommendation message may include an offer relating to the service offered by the network service entity 150. The recommendation message may therefore be targeted and contextually relevant.

In certain embodiments, the recommendation message may provide a communication item providing a shortcut to the recommended user action (for instance, the message may include a hyperlink providing a uniform resource locator, URL, for a subscriber service management webpage).

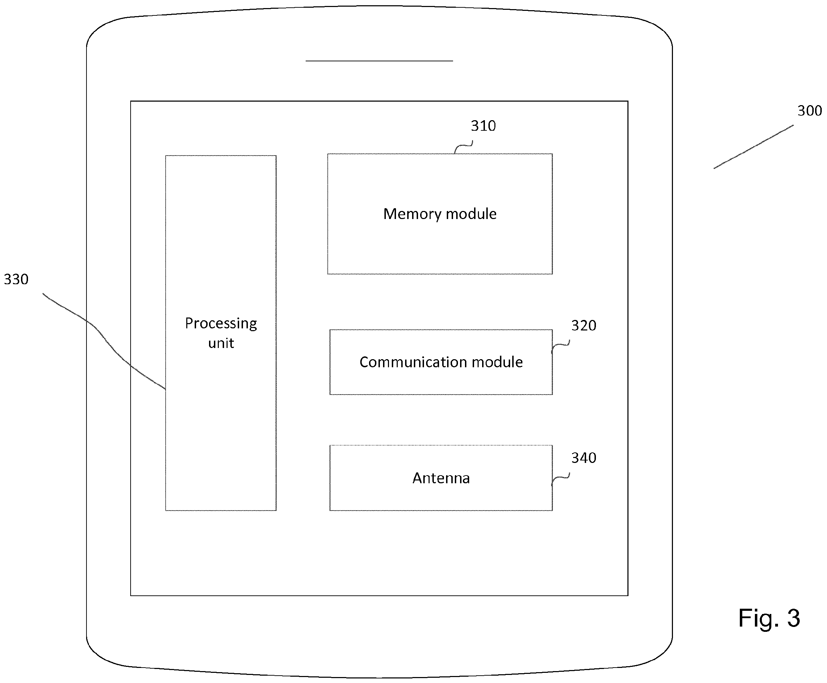

Figure 3 shows certain functional components of a terminal in accordance with the present disclosure. The terminal 130 of Figure 1 may be implemented with these components. The terminal includes a memory module 310, a communication unit (i.e. communication module) 320 and a processing unit 330. The memory module 310 serves to store data including instructions for the operation of the communication unit 320 and the processing unit 330. The communication unit 320 is configured to provide communication services over at least one access network (for example a wired network and/or a wireless network). The communication unit 320 when providing communication services over a wireless access network, does so by controlling the operation of an antenna arrangement 340. The processing unit comprises processing circuitry including at least one processor. Power may be supplied by one or more batteries, typically rechargeable batteries.

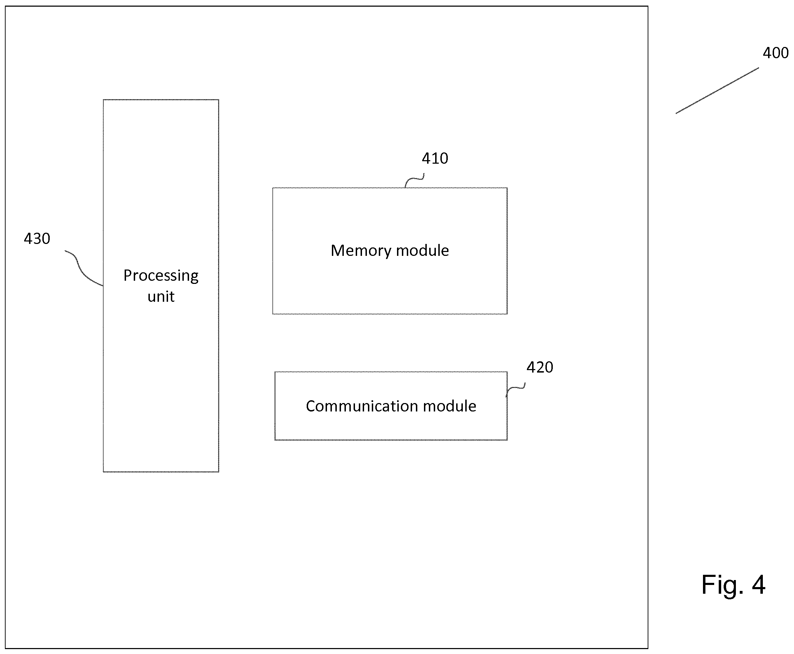

Figure 4 shows certain functional components of a controller entity in accordance with the present disclosure. The controller entity 120 of Figure 1 may be implemented with these components. The controller entity includes a controller memory module 410, a controller communication unit (i.e. controller communication module) 420 and a controller processing unit 430. The controller communication unit 420 is configured to provide communication services over at least one access network (for example a wired network and/or a wireless network) to at least one terminal 120, 300 connected to said access network. In the illustrated example, the controller communication unit 420 is configured to provide communication services to other elements in the network, for example the charging and billing system for the network operator, the Home Location Register (HLR), the Traffic Detection Function (TDF), signalling probes (for detecting issues such as call drops) etc. The controller processing unit 430 comprises processing circuitry including at least one processor.

In certain embodiments, the terminal of Figure 3 executes software (henceforth referred to as the "client"), the software being stored in the memory module 310. The client may be implemented as a software development kit, SDK, that is embedded in an existing application (such as a self-care application) that serves an existing useful purpose to a user (i.e. subscriber and/or customer). The SDK uses available device application program interfaces, APIs, to collect information on device operation and status such as what applications are running, how much data each application is using, if an application is in the foreground or background, if the device is locked, the status of a terminal battery, mobility status, screen aspect (i.e. portrait/landscape), whether a headset, a wearable device or other peripheral device is connected (either directly or via a short range communication technology such as Bluetooth or Zigbee), whether the camera button has been pressed, device location, what the signal quality is (e.g. for both Radio and WiFi) etc.

The reader will appreciate that the available information is limited only by the capabilities of the terminal.

The client uses standard APIs that Operating Systems (for instance iOS, Android etc.) make available to monitor certain terminal events. Certain other events cannot be monitored in this way and the client (i.e. the SDK) is required to implement at least one of the functionalities that are listed hereafter:
- configurability by the controller entity about which events to be reported to the controller entity itself
- configurability by the controller entity in respect of the frequency for reporting events and/or the conditions to be met before doing so
- facility to decide which channel to use to communicate with the controller entity (e.g. WiFi, Radio data, SMS, etc.) according to preference set by the controller entity and availability
- conflict resolution facility so that, in cases where more than one SDK is present amongst multiple applications active on the terminal, only one version of the SDK collects and sends information back to the controller entity at any time. It is noted that including the SDK in a plurality of different applications would increase the likelihood that a given subscriber will have at least one application containing the SDK installed.
- facility to communicate "uninstall" events, such that, if an application including the SDK is uninstalled, the controller entity is informed
- facility to freeze any monitoring and/or reporting operation if the battery level is below a given threshold (the threshold being a predetermined value set by the controller entity). In certain cases, freeze and unfreeze conditions have to be reported to the controller entity.

While OS standard APIs provide some information concerning the operation of the terminal (it is, for instance, possible to check whether a given application is running, either in background or foreground), there is no mechanism in either Android or iOS that fires a trigger when a given application is launched. Furthermore constantly monitoring which applications are in execution at any given time is considered undesirable because it heavily impacts the battery usage of the terminal. In mobile devices, in particular, battery usage is a constant concern.

To address the need to know the application, application type or service being used on the terminal, certain embodiments require the client to check which application is running in foreground when a specific operating system event occurs (such as call set-up, message sent/receive, change device orientation and so on). The definition of which events should be used to initiate a check of the running application(s) may be remotely configured by the controller entity, allowing the definition to be either: the combination of events, the occurrence of a single event or the occurrence of a plurality of different events. This thereby means the client is only invoked when one or more events are occurring on the device rather than having to run constantly in the background and thereby avoids excessive battery drain.. In certain cases, the order of occurrence of the different events may be significant - with different orders of the same individual events leading to the check of the running application(s) being initiated at different times, if at all.

In certain embodiments, the controller entity of Figure 4 executes software that exposes a set of APIs to other elements in the network (e.g. a SNS server) to allow said elements to register an interest in a specific event (or combination of events) for a specific user. The controller entity is thus dual-purpose, in that, to communicate and receive events from the client and to combine Device and Network events so as to provide feedback to those elements that have registered an interest in the event(s), including the client.

As previously noted the combination of both device and network information leads to more precisely and contextualized defined customer behaviour and data usage. Specific use cases illustrating this in the context of the sequence of operations in Figures 2A and 2B are now described.

Consider a case where the terminal reports in real-time that the customer has launched the email application and a piece of information within the network data indicates that the data bundle for the given user is about to run out (i.e. the subscriber has nearly consumed the volume of data for which he has paid in advance or the time period over which access to that data service is about to expire). As autonomous pieces of information they do not provide much value, but the controller entity is able to combine them, infer meaning and provide a trigger to one or more other functions (that have subscribed to it) about the fact that the given user will soon need an additional data allowance (in his/her subscriber "data bundle") to complete the anticipated action - i.e. to view emails. The or each function that subscribed to be notified can use the trigger to properly notify the user, and propose an appropriate offer (such as a product that allows free e-mail, or an increase to the size of their monthly data bundle) and in general to improve the user experience

In a further example, consider an application that demands high data transfer/ throughput. The terminal may report in real-time that the customer has launched the a music streaming application (e.g. the Spotify[RTM] application) and that the user is using Wi-Fi with specific quality parameters (speed, congestion, etc.). The network data may include information indicating that, at the user's (currently estimated) location, 4G coverage provides faster data rates than the current Wi-Fi connection (in Figure 1, this would be equivalent to indicating that connection via the first communication connection 112 would have faster data rates than communication via the second communication connection 114). The controller entity may combine these pieces of information and notify a registered network element that subscribed for it, which in turn may send a notification to the user of an offer such as "you seem to be experiencing a slow connection over Wi-Fi, why not try our super-fast 4G network for the rest of the day for only €1, so you can enjoy the content you want at the speed you need". The combination of information can also be used to drive specific content offers and/or other recommendations of actions.

In addition to the delivery of marketing offers, the controller entity may be extended to provide a real-time event detection solution, allowing consuming systems to use an open API to register for monitoring of events based on customer behaviour and to be triggered back when the event (or combination of events) occurs. Examples of such events may include some device events (examples of which are given above) and some from other sources of data giving criteria such as:
- Launch of a given mobile application
- Access to a given web site
- Set-up of a call (maybe with details of the called number)
- End of ongoing call
- Dropped call
- WiFi usage
- Roaming status
- Device type/ change device
- proximity/nearby location (i.e. when a given customer approaches a given location)
- NFC, Bluetooth or cell site based proximity (also known as "geo-fencing")

To illustrate the operation of the method of the present disclosure further, a number of use cases are now described:
1. network data obtained from a network monitoring entity may indicate that the 3G cell site (e.g. base station 110 in Figure 1) is about to be taken down for maintenance, when the controller entity combines this network data with the device knowledge that a customer has just started an download of a large file (obtained in a report message from the user terminal) and generates a recommendation message to prompt the (or each) customer in that state to switch Radio Access Technology to avoid the download failing.
2. where network data includes information obtained from the network charging system, knowledge that a customer has less than 100Mb allowance remaining may be combined, by the controller entity, with device knowledge (i.e. operational information) indicating that the user has just requested a download that is greater than 100Mb, the resulting recommendation message may include a user warning and/or offer an extra free allowance to ensure the download doesn't fail due to insufficient credit. As a result, network capacity is not wasted on incomplete downloads.
3. where network data includes information concerning levels of congestion in the network (or a part thereof, such as the backhaul between base station and core network), knowledge of network loading (e.g. number of customers/cell, etc.) may be used in conjunction with knowledge of what a customer is trying to do (e.g. executing an e-mail application, video streaming application, etc.) to generate a recommendation message that instructs the automatic reconnection of the user terminal to an access technology that is calculated to deliver better performance in terms of battery usage and/or access speed. Thus a recommendation message may include a command directed to the user terminal in addition to, or as an alternative to, a message addressed to the user him/her-self.
4. the operational information obtained by the client may include knowledge indicative of the physical location of the terminal and information concerning the application being used (e.g. video streaming application), when this operational information is combined with network signalling quality maps, the controller entity may determine that the user is moving into an area with significantly poorer coverage and instruct (in the recommendation message) the user terminal to adjust the video bit rate dynamically (this may be achieved by application of video optimisation tools or by instructing the user terminal to request a lower quality video, for instance). As a result, unwanted effects such as the stalling or buffering of video data may be avoided as the customer crosses into areas of poorer coverage.

In a variant on the above instead of recommending (or indeed commanding) a rate limiting operation, the controller entity may recommend that the user terminal adopts faster rates of download for pre-recorded video data while still in good coverage (e.g. increases the buffer of data for display ahead of what is actually showing), so that when radio quality worsens the video can then play from the buffer to reduce any customer impact.
5. the controller entity may detect a low battery state (in the user terminal battery) from the report of operational information, and combine that detection with knowledge (i.e. network data) of congestion of nearby cell sites to generate a recommendation (or a command) dynamically for the user terminal to change settings to maximise battery life.
6. where the network data includes historical information that indicates times of day in which the network experiences high congestion levels, and where the report of operational data includes information indicating that user is downloading a large file (e.g. video content, an application update, etc.), the controller entity may generate a recommendation proposing that the user defer the download (specifying when congestion levels are expected to be lower or reminding the user when the network reports better rates). While the user may agree to defer the download to avoid slow download speeds, the recommendation may be linked to a charging function of the network so that when the proposed deferred download is accepted that download may be allowed at a special cost or with an additional service offering (or at no cost all).
7. where the report from the terminal indicates that the user (i.e. the customer) is using the device as a Wi-Fi hotspot and where the network data includes information from the network's charging system indicating that data allowance (for use of the cellular network) may be near expiry (e.g. consumed or out-of-time), the recommendation may offer a special data package to the customer using the device as a Wi-Fi hotspot.
8. If it is known that a customer is using their device as a hotspot in an area, the identifier for that hotspot (e.g. SSID or similar) may also be inferred. In such cases, events may be "armed" on other mobile devices known to be close geographically to that area to detect whether these other mobile devices attempt to use that hotspot. Users of these other mobile devices may then be addressed with a recommendation encouraging them to use their own mobile data allocation instead (rather than using WiFi from the host hotspot device and potentially draining the battery of the host more). Here insight is gathered from more than one device to infer a new bit of information that would not otherwise be known.

As may be appreciated from the preceding examples, the combined knowledge of device capabilities, device location (determined by the terminal from GPS location, Bluetooth beacon, or Cell-ID, for example) and network functionalities associated with the device location (e.g. 4G/VoLTE/MBMS) may be used to provide users with an enhanced and higher quality user experience.

It will be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the appended claims.

For example, whilst embodiments described in the foregoing description refer to LTE, it should be noted that the aggregator architecture described may equally be deployed in telecommunications networks based on other cellular telecommunication architectures, for example 2G, 3G, LTE-Advanced (3GPP Release 10 onwards), future architectures (e.g., 5G), as well as WD-CDMA and WiMAX.

In addition, it will be apparent to the reader that the term radio access technology (RAT) may extend to include related technologies such as conventional Wi-Fi technologies (i.e. compliant with the IEEE 802.11 family of standards) and/or VLC technologies, where the context requires or allows this.

It will also be well understood by persons of ordinary skill in the art that whilst the described embodiments implement certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software.

## Claims

1. A method for recommending an action at an electronic terminal (130) in a communication network, the method comprising, in a controller entity (120):
providing (220) a notification profile to the electronic terminal, wherein providing a notification profile includes:
receiving (210), from one or more external elements (150), one or more requests for monitoring of one or more specific events; and
generating the notification profile in accordance with the one or more requests,
receiving (250) a report message including operational information associated with the electronic terminal in accordance with the notification profile, wherein the operational information associated with the electronic terminal includes information indicating:
which applications are running on the terminal; and
for any given running application, whether said application is running in foreground or background;
obtaining (260) at least one item of network data,
generating (280) a recommendation message in accordance with the operational information and at least one item of network data,
transmitting (290) the recommendation message to the electronic terminal.

2. A method for recommending an action at an electronic terminal (130) in a communication network, the method comprising, in a controller entity (120):
providing (220) a notification profile to the electronic terminal, wherein providing a notification profile includes:
receiving (210), from one or more external elements (150), one or more requests for monitoring of one or more specific events; and
generating the notification profile in accordance with the one or more requests,
receiving (250) a report message including operational information associated with the electronic terminal in accordance with the notification profile, wherein the operational information associated with the electronic terminal includes information indicating:
which applications are running on the terminal; and
for any given running application, whether said application is running in foreground or background;
obtaining (260) at least one item of network data,
depending upon the operational information and the network data, determining whether to generate a recommendation message,
if the recommendation message is to be generated, generating the recommendation message in accordance with the operational information and at least one item of network data, and transmitting (290) the recommendation message to the electronic terminal if a predetermined recommendation condition is fulfilled.

3. A method according to claim 1 or claim 2, further comprising,
receiving, from an external element of the one or more external elements, a further request of monitoring of one or more further specific events; and
controlling the terminal to update the notification profile in accordance with the further request.

4. A method according to any preceding claim, wherein the notification profile includes address details for the controller entity.

5. A method according to any preceding claim, wherein obtaining at least one item of network data includes transmitting a network monitoring request to a network monitoring entity, and receiving a network monitoring response to said network data request.

6. A method for recommending an action at an electronic terminal (130) in a communication network, the method comprising, in the electronic terminal:
obtaining (220) a notification profile from a controller entity (120), the notification profile including a predetermined list of specific events for monitoring;
obtaining (240) operational information associated with the electronic terminal, wherein the operational information associated with the electronic terminal includes information indicating:
which applications are running on the terminal; and
for any given running application, whether said application is running in foreground or background;
in accordance with the notification profile, transmitting (250) said operational information to the controller entity via the communication network; and
receiving (290) a recommendation message from the controller entity, the recommendation message being generated in accordance with the operational information and at least one item of network data.

7. A method according to claim 6, wherein the notification profile includes an indication of at least one trigger parameter, wherein the obtained operational information includes an indication of the value of the or each trigger parameter, and wherein transmitting said operational information to the controller entity is conditional upon the value of the or each trigger parameter.

8. A controller entity (120) having a communication unit (420) and a processing unit (430), the communication unit being configured to provide (220) a notification profile to an electronic terminal (130), to receive (250) a report message from the electronic terminal, the report message including operational information associated with the electronic terminal in accordance with the notification profile, and to obtain (260) at least one item of network data from a network monitoring entity, and the processing unit being configured to initiate generation (280) of a recommendation message in accordance with the operational information and the at least one item of network data; and
wherein the communication unit is further configured to transmit (290) the recommendation message to the electronic terminal,
wherein providing a notification profile to the electronic terminal includes:
receiving, from one or more external elements (150), one or more requests for monitoring of one or more specific events; and
generating the notification profile in accordance with the one or more requests,
wherein the operational information associated with the electronic terminal includes information indicating:
which applications are running on the terminal; and
for any given running application, whether said application is running in foreground or background.

9. A controller entity according to claim 8, wherein the processing unit is further configured to generate the recommendation message and to control the communication unit to transmit the generated recommendation message to the electronic terminal.

10. A controller entity according to claim 8, wherein the processing unit is configured to initiate generation of a recommendation message at a network service entity by transmitting a service alert message to the network service entity, the service alert message including the operational information and the at least one item of network data, and
wherein the processing unit is further configured to control the communication unit to receive a generated recommendation message from the network service entity and to transmit the received recommendation message to the electronic terminal.

11. An electronic terminal (120) in communicative connection with a controller entity (130) via a communication network, the electronic terminal having a communication unit (320) and a processing unit (330), the communication unit being configured to obtain (220) a notification profile from the controller entity, the notification profile including a predetermined list of specific events for monitoring; and the processing unit being configured to obtain (240) operational information associated with the electronic terminal, wherein the operational information associated with the electronic terminal includes information indicating:
which applications are running on the terminal; and
for any given running application, whether said application is running in foreground or background;
the communication unit being further configured to transmit (250) said operational information to the controller entity via the communication network in accordance with the notification profile and to receive (290) a recommendation message from the controller entity,
wherein the recommendation message includes a recommendation generated in accordance with the operational information and at least one item of network data.

## Patentansprüche

1. Ein Verfahren zum Empfehlen einer Aktion an einem elektronischen Endgerät (130) in einem Kommunikationsnetzwerk, wobei das Verfahren Folgendes umfasst, in einer Steuerungsvorrichtung (120):
Bereitstellen (220) eines Benachrichtigungsprofils für das elektronische Endgerät, wobei das Bereitstellen eines Benachrichtigungsprofils Folgendes beinhaltet:
Empfangen (210), von einem oder mehreren externen Elementen (150), einer oder mehrerer Anfragen zur Überwachung eines oder mehrerer bestimmter Ereignisse; und
Erzeugen des Benachrichtigungsprofils entsprechend der einen oder den mehreren Anfragen,
Empfangen (250) einer Berichtsnachricht beinhaltend dem elektronischen Endgerät zugeordnete Betriebsinformationen entsprechend dem Benachrichtigungsprofil, wobei die dem elektronischen Endgerät zugeordneten Betriebsinformationen Informationen beinhalten, die Folgendes angeben:
welche Anwendungen auf dem Endgerät ausgeführt werden; und
für jede gegebene laufende Anwendung, ob die genannte Anwendung im Vordergrund oder im Hintergrund ausgeführt wird;
Abrufen (260) zumindest eines Netzwerkdatenelements,
Erzeugen (280) einer Empfehlungsnachricht entsprechend den Betriebsinformationen und zumindest einem Netzwerkdatenelement, Übermitteln (290) der Empfehlungsnachricht an das elektronische Endgerät.

2. Ein Verfahren zum Empfehlen einer Aktion an einem elektronischen Endgerät (130) in einem Kommunikationsnetzwerk, wobei das Verfahren Folgendes umfasst, in einer Steuerungsvorrichtung (120):
Bereitstellen (220) eines Benachrichtigungsprofils für das elektronische Endgerät, wobei das Bereitstellen eines Benachrichtigungsprofils Folgendes beinhaltet:
Empfangen (210), von einem oder mehreren externen Elementen (150), einer oder mehrerer Anfragen zur Überwachung eines oder mehrerer bestimmter Ereignisse; und
Erzeugen des Benachrichtigungsprofils entsprechend der einen oder den mehreren Anfragen,
Empfangen (250) einer Berichtsnachricht beinhaltend dem elektronischen Endgerät zugeordnete Betriebsinformationen entsprechend dem Benachrichtigungsprofil, wobei die dem elektronischen Endgerät zugeordneten Betriebsinformationen Informationen beinhalten, die Folgendes angeben:
welche Anwendungen auf dem Endgerät ausgeführt werden; und
für jede gegebene laufende Anwendung, ob die genannte Anwendung im Vordergrund oder im Hintergrund ausgeführt wird;
Abrufen (260) zumindest eines Netzwerkdatenelements,
in Abhängigkeit von den Betriebsinformationen und den Netzwerkdaten, Bestimmen, ob eine Empfehlungsnachricht erzeugt werden soll,
wenn die Empfehlungsnachricht erzeugt werden soll, Erzeugen der Empfehlungsnachricht entsprechend den Betriebsinformationen und zumindest einem Netzwerkdatenelement und Übermitteln (290) der Empfehlungsnachricht an das elektronische Endgerät, wenn eine zuvor bestimmte Empfehlungsbedingung erfüllt ist.

3. Ein Verfahren nach Anspruch 1 oder Anspruch 2, weiter umfassend,
Empfangen, von einem externen Element des einen oder der mehreren externen Elemente, einer weiteren Anfrage zur Überwachung eines oder mehrerer weiterer bestimmter Ereignisse; und
Steuern des Endgerätes, damit das Benachrichtigungsprofil entsprechend der weiteren Anfrage aktualisiert wird.

4. Ein Verfahren nach einem vorhergehenden Anspruch, wobei das Benachrichtigungsprofil Adressdetails für die Steuerungsvorrichtung beinhaltet.

5. Ein Verfahren nach einem vorhergehenden Anspruch, wobei das Abrufen zumindest eines Netzwerkdatenelements beinhaltet, dass eine Anfrage zur Netzwerküberwachung an eine Netzwerküberwachungsvorrichtung übermittelt wird und eine Netzwerküberwachungsantwort auf die genannte Anfrage zur Netzwerküberwachung empfangen wird.

6. Ein Verfahren zum Empfehlen einer Aktion an einem elektronischen Endgerät (130) in einem Kommunikationsnetzwerk, wobei das Verfahren Folgendes umfasst, in dem elektronischen Endgerät:
Abrufen (220) eines Benachrichtigungsprofils von einer Steuerungsvorrichtung (120), wobei das Benachrichtigungsprofil eine zuvor bestimmte Liste bestimmter Ereignisse zur Überwachung beinhaltet;
Abrufen (240) von dem elektronischen Endgerät zugeordneten Betriebsinformationen, wobei die dem elektronischen Endgerät zugeordneten Betriebsinformationen Informationen beinhalten, die Folgendes angeben:
welche Anwendungen auf dem Endgerät ausgeführt werden; und
für jede gegebene laufende Anwendung, ob die genannte Anwendung im Vordergrund oder im Hintergrund ausgeführt wird;
entsprechend dem Benachrichtigungsprofil, Übermitteln (250) der genannten Betriebsinformationen an die Steuerungsvorrichtung über das Kommunikationsnetzwerk; und
Empfangen (290) einer Empfehlungsnachricht von der Steuerungsvorrichtung, wobei die Empfehlungsnachricht entsprechend den Betriebsinformationen und zumindest einem Netzwerkdatenelement erzeugt wird.

7. Ein Verfahren nach Anspruch 6, wobei das Benachrichtigungsprofil eine Angabe von zumindest einem Auslöseparameter beinhaltet, wobei die abgerufenen Betriebsinformationen eine Angabe des Wertes des oder jedes Auslöseparameters beinhalten und wobei das Übermitteln der genannten Betriebsinformationen an die Steuerungsvorrichtung von dem Wert des oder jedes Auslöseparameters abhängig ist.

8. Eine Steuerungsvorrichtung (120) mit einer Kommunikationseinheit (420) und einer Verarbeitungseinheit (430), wobei die Kommunikationseinheit so konfiguriert ist, dass ein Benachrichtigungsprofil für ein elektronisches Endgerät (130) bereitgestellt wird (220), dass eine Berichtsnachricht von dem elektronischen Endgerät empfangen wird (250), wobei die Berichtsnachricht dem elektronischen Endgerät zugeordnete Betriebsinformationen entsprechend dem Benachrichtigungsprofil umfasst, und dass zumindest ein Netzwerkdatenelement von einer Netzwerküberwachungsvorrichtung abgerufen wird (260), und wobei die Verarbeitungseinheit so konfiguriert ist, dass die Erzeugung (280) einer Empfehlungsnachricht entsprechend den Betriebsinformationen und dem zumindest einem Netzwerkdatenelement eingeleitet wird; und
wobei die Kommunikationseinheit weiter so konfiguriert ist, dass die Empfehlungsnachricht an das elektronische Endgerät übermittelt wird (290),
wobei das Bereitstellen eines Benachrichtigungsprofils für das elektronische Endgerät Folgendes beinhaltet:
Empfangen, von einem oder mehreren externen Elementen (150), einer oder mehrerer Anfragen zur Überwachung eines oder mehrerer bestimmter Ereignisse; und
Erzeugen des Benachrichtigungsprofils entsprechend der einen oder den mehreren Anfragen, wobei die dem elektronischen Endgerät zugeordneten Betriebsinformationen Informationen beinhalten, die Folgendes angeben:
welche Anwendungen auf dem Endgerät ausgeführt werden; und
für jede gegebene laufende Anwendung, ob die genannte Anwendung im Vordergrund oder im Hintergrund ausgeführt wird.

9. Eine Steuerungsvorrichtung nach Anspruch 8, wobei die Verarbeitungseinheit weiter so konfiguriert ist, dass die Empfehlungsnachricht erzeugt wird und dass die Kommunikationseinheit gesteuert wird, damit sie die erzeugte Empfehlungsnachricht an das elektronische Endgerät übermittelt.

10. Eine Steuerungsvorrichtung nach Anspruch 8, wobei die Verarbeitungseinheit so konfiguriert ist, dass die Erzeugung einer Empfehlungsnachricht an einer Netzwerkdienstvorrichtung eingeleitet wird, indem eine Dienstwarnmeldung an die Netzwerkdienstvorrichtung übermittelt wird, wobei die Dienstwarnmeldung die Betriebsinformationen und das zumindest eine Netzwerkdatenelement beinhaltet, und
wobei die Verarbeitungseinheit weiter so konfiguriert ist, dass die Kommunikationseinheit gesteuert wird, damit sie eine erzeugte Empfehlungsnachricht von der Netzwerkdienstvorrichtung empfängt und die empfangene Empfehlungsnachricht an das elektronische Endgerät übermittelt.

11. Ein elektronisches Endgerät (120), das über ein Kommunikationsnetzwerk in kommunikativer Verbindung mit einer Steuerungsvorrichtung (130) steht, wobei das elektronische Endgerät eine Kommunikationseinheit (320) und eine Verarbeitungseinheit (330) aufweist, wobei die Kommunikationseinheit so konfiguriert ist, dass ein Benachrichtigungsprofil von der Steuerungsvorrichtung abgerufen wird (220), wobei das Benachrichtigungsprofil eine zuvor bestimmte Liste bestimmter Ereignisse zur Überwachung umfasst; und wobei die Verarbeitungseinheit so konfiguriert ist, dass dem elektronischen Endgerät zugeordnete Betriebsinformationen abgerufen werden (240), wobei die dem elektronischen Endgerät zugeordneten Betriebsinformationen Informationen beinhalten, die Folgendes angeben:
welche Anwendungen auf dem Endgerät ausgeführt werden; und
für jede gegebene laufende Anwendung, ob die genannte Anwendung im Vordergrund oder im Hintergrund ausgeführt wird;
wobei die Kommunikationseinheit weiter so konfiguriert ist, dass die genannten Betriebsinformationen entsprechend dem Benachrichtigungsprofil über das Kommunikationsnetzwerk an die Steuerungsvorrichtung übertragen werden (250) und dass eine Empfehlungsnachricht von der Steuerungsvorrichtung empfangen wird (290),
wobei die Empfehlungsnachricht eine Empfehlung beinhaltet, die entsprechend den Betriebsinformationen und zumindest einem Netzwerkdatenelement erzeugt wurde.

## Revendications

1. Un procédé de recommandation d'une action au niveau d'un terminal électronique (130) dans un réseau de communication, le procédé comprenant, dans une entité dispositif de commande (120) :
la fourniture (220) d'un profil de notification au terminal électronique, où la fourniture d'un profil de notification comprend :
la réception (210), à partir d'un ou de plusieurs éléments externes (150), d'une ou de plusieurs demandes de surveillance d'un ou de plusieurs événements spécifiques, et
la génération du profil de notification conformément aux une ou plusieurs demandes,
la réception (250) d'un message de rapport contenant des informations opérationnelles associées au terminal électronique conformément au profil de notification, où les informations opérationnelles associées au terminal électronique comprennent des informations indiquant :
les applications qui sont exécutées sur le terminal, et
pour toute application exécutée donnée, si ladite application est exécutée en avant-plan ou en arrière-plan,
l'obtention (260) d'au moins un élément de données de réseau,
la génération (280) d'un message de recommandation conformément aux informations opérationnelles et à au moins un élément de données de réseau,
la transmission (290) du message de recommandation au terminal électronique.

2. Un procédé de recommandation d'une action au niveau d'un terminal électronique (130) dans un réseau de communication, le procédé comprenant, dans une entité dispositif de commande (120) :
la fourniture (220) d'un profil de notification au terminal électronique, où la fourniture d'un profil de notification comprend :
la réception (210), à partir d'un ou de plusieurs éléments externes (150), d'une ou de plusieurs demandes de surveillance d'un ou de plusieurs événements spécifiques, et
la génération du profil de notification conformément aux une ou plusieurs demandes,
la réception (250) d'un message de rapport contenant des informations opérationnelles associées au terminal électronique conformément au profil de notification, où les informations opérationnelles associées au terminal électronique comprennent des informations indiquant :
les applications qui sont exécutées sur le terminal, et
pour toute application exécutée donnée, si ladite application est exécutée en avant-plan ou en arrière-plan,
l'obtention (260) d'au moins un élément de données de réseau,
en fonction des informations opérationnelles et des données de réseau, la détermination s'il convient de générer un message de recommandation,
si le message de recommandation doit être généré, la génération du message de recommandation conformément aux informations opérationnelles et à au moins un élément de données de réseau, et la transmission (290) du message de recommandation au terminal électronique si une condition de recommandation prédéterminée est satisfaite.

3. Un procédé selon la Revendication 1 ou 2, comprenant en outre :
la réception, à partir d'un élément externe des un ou plusieurs éléments externes, d'une autre demande de surveillance d'un ou de plusieurs autres événements spécifiques, et
la commande du terminal de façon à actualiser le profil de notification conformément à l'autre demande.

4. Un procédé selon l'une quelconque des Revendications précédentes, où le profil de notification comprend des détails d'adresse pour l'entité dispositif de commande.

5. Un procédé selon l'une quelconque des Revendications précédentes, où l'obtention d'au moins un élément de données de réseau comprend la transmission d'une demande de surveillance de réseau à une entité de surveillance de réseau, et la réception d'une réponse de surveillance de réseau à ladite demande de données de réseau.

6. Un procédé de recommandation d'une action au niveau d'un terminal électronique (130) dans un réseau de communication, le procédé comprenant, dans le terminal électronique :
l'obtention (220) d'un profil de notification à partir d'une entité dispositif de commande (120), le profil de notification comprenant une liste prédéterminée d'événements spécifiques pour la surveillance,
l'obtention (240) d'informations opérationnelles associées au terminal électronique, où les informations opérationnelles associées au terminal électronique comprennent des informations indiquant :
les applications qui sont exécutées sur le terminal, et
pour toute application exécutée donnée, si ladite application est exécutée en avant-plan ou en arrière-plan,
conformément au profil de notification, la transmission (250) desdites informations opérationnelles à l'entité dispositif de commande par l'intermédiaire du réseau de communication, et
la réception (290) d'un message de recommandation à partir de l'entité dispositif de commande, le message de recommandation étant généré conformément aux informations opérationnelles et à au moins un élément de données de réseau.

7. Un procédé selon la Revendication 6, où le profil de notification comprend une indication d'au moins un paramètre de déclenchement, où les informations opérationnelles obtenues comprennent une indication de la valeur du ou de chaque paramètre de déclenchement, et où la transmission desdites informations opérationnelles à l'entité dispositif de commande est conditionnée par la valeur du ou de chaque paramètre de déclenchement.

8. Une entité dispositif de commande (120) possédant une unité de communication (420) et une unité de traitement (430), l'unité de communication étant configurée de façon à fournir (220) un profil de notification à un terminal électronique (130), à recevoir (250) un message de rapport à partir du terminal électronique, le message de rapport contenant des informations opérationnelles associées au terminal électronique conformément au profil de notification, et à obtenir (260) au moins un élément de données de réseau à partir d'une entité de surveillance de réseau, et l'unité de traitement étant configurée de façon à lancer la génération (280) d'un message de recommandation conformément aux informations opérationnelles et au au moins un élément de données de réseau, et
où l'unité de communication est configurée en outre de façon à transmettre (290) le message de recommandation au terminal électronique,
où la fourniture d'un profil de notification au terminal électronique comprend :
la réception, à partir d'un ou de plusieurs éléments externes (150), d'une ou de plusieurs demandes de surveillance d'un ou de plusieurs événements spécifiques, et
la génération du profil de notification conformément aux une ou plusieurs demandes, où les informations opérationnelles associées au terminal électronique comprennent des informations indiquant :
les applications qui sont exécutées sur le terminal, et
pour toute application exécutée donnée, si ladite application est exécutée en avant-plan ou en arrière-plan.

9. Une entité dispositif de commande selon la Revendication 8, où l'unité de traitement est configurée en outre de façon à générer le message de recommandation et à commander l'unité de communication de façon à transmettre le message de recommandation généré au terminal électronique.

10. Une entité dispositif de commande selon la Revendication 8, où l'unité de traitement est configurée de façon à lancer la génération d'un message de recommandation au niveau d'une entité de service de réseau par la transmission d'un message d'alerte de service à l'entité de service de réseau, le message d'alerte de service contenant les informations opérationnelles et le au moins un élément de données de réseau, et
où l'unité de traitement est configurée en outre de façon à commander l'unité de communication de façon à recevoir un message de recommandation généré à partir de l'entité de service de réseau et à transmettre le message de recommandation reçu au terminal électronique.

11. Un terminal électronique (120) en connexion communicative avec une entité dispositif de commande (130) par l'intermédiaire d'un réseau de communication, le terminal électronique possédant une unité de communication (320) et une unité de traitement (330), l'unité de communication étant configurée de façon à obtenir (220) un profil de notification à partir de l'entité dispositif de commande, le profil de notification comprenant une liste prédéterminée d'événements spécifiques pour la surveillance, et l'unité de traitement étant configurée de façon à obtenir (240) des informations opérationnelles associées au terminal électronique, où les informations opérationnelles associées au terminal électronique comprennent des informations indiquant :
les applications qui sont exécutées sur le terminal, et
pour toute application exécutée donnée, si ladite application est exécutée en avant-plan ou en arrière-plan,
l'unité de communication étant configurée en outre de façon à transmettre (250) lesdites informations opérationnelles à l'entité dispositif de commande par l'intermédiaire du réseau de communication conformément au profil de notification et à recevoir (290) un message de recommandation à partir de l'entité dispositif de commande,
où le message de recommandation contient une recommandation générée conformément aux informations opérationnelles et à au moins un élément de données de réseau.
